# EUROPÄISCHE PATENTSCHRIFT

(11) **EP 4 555 294 B1**
(45) Veröffentlichungstag und Bekanntmachung des Hinweises auf die Patenterteilung: **22.07.2026**
(21) Anmeldenummer: 23741353.9
(22) Anmeldetag: 10.07.2023
(51) Int. Cl.: G01M 13/02

(54) **PRÜFSTAND ZUM PRÜFEN VON EIGENSCHAFTEN EINES ELEKTRISCH ANTREIBBAREN ACHSMODULS FÜR EIN KRAFTFAHRZEUG**
TEST STAND FOR TESTING PROPERTIES OF AN ELECTRICALLY DRIVABLE AXLE MODULE FOR A MOTOR VEHICLE
BANC D'ESSAI POUR TESTER LES PROPRIÉTÉS D'UN MODULE D'ESSIEU À ENTRAÎNEMENT ÉLECTRIQUE POUR UN VÉHICULE AUTOMOBILE

(30) Priorität: 11.07.2022 DE 102022207056
(43) Veröffentlichungstag der Anmeldung: 21.05.2025
(73) Patentinhaber: ZF Friedrichshafen AG, 88046 Friedrichshafen (DE)
(72) Erfinder: HELL, Christian, 94107 Untergriesbach (DE); DOLLINGER, Thomas, 94036 Passau (DE)
(74) Vertreter: ZF Friedrichshafen AG
(86) Internationale Anmeldenummer: PCT/EP2023/069056
(87) Internationale Veröffentlichungsnummer: WO 2024/013104

(56) Entgegenhaltungen:
- DE-A1- 102012 007 576
- JP-A- H05 231 991
- US-A- 5 471 871

## Beschreibung

Die Erfindung betrifft einen Prüfstand zum Prüfen von Eigenschaften eines elektrisch antreibbaren Achsmoduls für ein Kraftfahrzeug gemäß dem Oberbegriff von Anspruch 1.

Getriebeprüfstände bzw. Antriebsstrangprüfstände zum Prüfen von Kraftfahrzeuggetrieben bzw. von vollständigen Kraftfahrzeugantriebssträngen sind aus dem Stand der Technik bekannt. Derartige Prüfstände werden üblicherweise zur Qualitätskontrolle verwendet, um Funktionsstörungen in Antriebssträngen frühzeitig durch eine Reihe von Belastungstests zu erkennen. Typische Funktionsstörungen entstehen z.B. durch spielbehaftete Bauteile, wie z. B. Zahnräder, Synchronringe, Synchronkörper, Lamellenkupplungsscheiben und Wellen, die ausgelenkt und zu Schwingungen angeregt werden können. Im Rahmen einer derartigen Qualitätskontrolle werden in der Regel auch das Akustikverhalten und die Schaltqualität geprüft. Darüber hinaus finden derartige Prüfstände aber auch in der Entwicklung und stetigen Verbesserung von Kraftfahrzeugantriebssträngen Verwendung.

In diesem Zusammenhang beschreibt die DE 103 28 461 A1 einen Fahrzeugprüfstand mit einer Belastungsmaschine für jedes antreibbare Rad eines Kraftfahrzeugs. Die Belastungsmaschinen sind dabei direkt, beispielsweise über Radbolzen, oder indirekt, beispielsweise über einen Riementrieb, mit den Felgen der Kraftfahrzeugräder verbunden, so dass die Belastungsmaschinen den Antriebsstrang sowohl antreiben als auch bremsen können. Der Fahrzeugprüfstand der DE 103 28 461 A1 umfasst weiterhin eine Rahmenkonstruktion, über welche das Kraftfahrzeug und die Belastungsmaschinen angehoben und zueinander ausgerichtet werden können. Während des Prüfvorgangs wird das Kraftfahrzeug vollständig über die Rahmenkonstruktion gehalten, so dass die Fahrzeugräder keinen Bodenkontakt haben.

Aus der noch unveröffentlichten DE 10 2022 202 300.5 der Anmelderin ist ein sog. "End-of-Line"-Prüfstand bekannt, welcher dazu verwendet wird, einen elektrischen Achsantrieb direkt nach dessen Montage einem Funktionstest zu unterziehen. Dazu wird der elektrische Achsantrieb im Prüfstand angeordnet und die zwei Abtriebswellen des Achsantriebs werden automatisiert mit zwei Prüfstandswellen, welche jeweils mit einem Belastungsmotor des Prüfstands in Triebverbindung stehen, drehfest verbunden.

Die DE 10 2012 007 567 A1 beschreibt einen Teststand zum Prüfen von u.a. elektrischen Antrieben, bei dem eine Aufnahmevorrichtung für einen Prüfling als Grundplatte mit einer Vielzahl von Bohrungen ausgebildet ist. Die Bohrungen sind derart ausgebildet, dass die Aufnahme und Befestigung unterschiedlicher Prüflinge ermöglicht wird. Der Teststand umfasst auch eine Rechen- und Steuerungseinheit zum Verarbeiten und Weitergeben von Eingangs- und Ausgangsdaten des Antriebs- bzw. Belastungsmotors.

Die US 5 471 871 A offenbart einen Getriebeprüfstand mit einer Transmission Fluid Recovery Unit, die für die fluidtechnische Kontaktierung des Prüflings vorgesehen ist.

Die JP H05 231 991 A offenbart ein automatisiertes Prüfgerät für automatische Fahrzeuggetriebe, das speziell für den Einsatz in Fertigungslinien konzipiert ist. Ein zentrales Element ist die automatisierte Zuführung der Prüflinge über ein Förderband.

Die bekannten Kraftfahrzeugprüfstände sind jedoch dahingehend nachteilbehaftet, als dass das Einspannen des Prüflings in den Prüfstand vergleichsweise aufwändig und langwierig ist und in der Regel zudem eine Anpassung insbesondere der mechanischen Schnittstellen des Prüfstands an eine jeweils spezifische Gattung von Prüflingen bzw. Antriebssystemen erforderlich macht.

Es ist eine Aufgabe der vorliegenden Erfindung, einen verbesserten Prüfstand zum Prüfen von Eigenschaften eines elektrisch antreibbaren Achsmoduls für ein Kraftfahrzeug vorzuschlagen.

Diese Aufgabe wird erfindungsgemäß durch den Prüfstand zum Prüfen von Eigenschaften eines elektrisch antreibbaren Achsmoduls für ein Kraftfahrzeug gemäß Anspruch 1 gelöst. Vorteilhafte Ausgestaltungen ergeben sich aus den Unteransprüchen.

Die Erfindung betrifft einen Prüfstand zum Prüfen von Eigenschaften eines elektrisch antreibbaren Achsmoduls für ein Kraftfahrzeug, umfassend mindestens eine Belastungseinheit und mindestens einen Prüflingsträger mit einer mechanischen Schnittstelle zum Einspannen des Achsmoduls, einer elektrischen Schnittstelle zum Bestromen des Achsmoduls, einer Sensorschnittstelle zum Kontaktieren von Sensoren des Achsmoduls und einer Fluidschnittstelle zur Fluidversorgung des Achsmoduls. Der erfindungsgemäße Prüfstand zeichnet sich dadurch aus, dass die mechanische Schnittstelle als wechselbare Prüflingsaufnahme ausgebildet ist, auf welche das Achsmodul über definierte Kontaktstellen ablegbar ist.

Die Erfindung beschreibt also einen Prüfstand, der dazu geeignet ist, Eigenschaften eines elektrisch antreibbaren Achsmoduls für ein Kraftfahrzeug zu prüfen. Bei den Eigenschaften, die mittels des Prüfstands geprüft werden können, handelt es sich vorzugsweise um mechanische Eigenschaften sowie um akustische Eigenschaften unter verschiedenen mechanischen Belastungen des Achsmoduls, wobei die Belastungen durch die mindestens eine Belastungseinheit vorgegeben werden können.

Das elektrisch antreibbare Achsmodul ist zum Betrieb in einem Kraftfahrzeug ausgebildet, vorzugsweise in einem PKW. Das Achsmodul weist einen elektrischen Antriebsmotor, ein Untersetzungsgetriebe, insbesondere ein schaltbares Untersetzungsgetriebe, sowie mindestens eine Abtriebswelle auf. Bevorzugt weist das Achsmodul zudem zwei Abtriebswellen auf, wobei jede der zwei Abtriebswellen eine Radwelle der Achse darstellt.

Der erfindungsgemäße Prüfstand umfasst auch mindestens eine Belastungseinheit und mindestens einen Prüflingsträger. Bei der mindestens einen Belastungseinheit handelt es sich vorteilhaft um mindestens einen Elektromotor. Elektromotoren sind vergleichsweise kompaktbauend, haben insbesondere im Vergleich zu Verbrennungsmotoren ein breites Drehzahlspektrum und weisen vorteilhaft über einen weiten Drehzahlbereich ein weitgehend maximales Drehmoment auf.

Vorteilhaft ist für jede Abtriebswelle des Achsmoduls eine Belastungseinheit vorgesehen, so dass der Prüfstand in der Regel zwei Belastungseinheiten aufweisen wird.

Die mindestens eine Belastungseinheit weist eine Motorwelle auf, welche jeweils mit einer Abtriebswelle des Achsmoduls trieblich verbindbar ist. Somit kann das Achsmodul von der mindestens einen Belastungseinheit mit vorgebbaren Drehmomenten und Drehzahlen beaufschlagt werden. Das Drehmoment und die Drehzahl stellen gemeinsam eine mechanische Leistung dar, mit welcher das Achsmodul belastet werden kann, in anderen Worten also die mechanische Belastung des Achsmoduls.

Gleichzeitig kann auch der Elektromotor des Achsmoduls eine vorgebbare Drehzahl und ein vorgebbares Drehmoment erzeugen, welches beispielsweise der Drehzahl und dem Drehmoment der mindestens einen Belastungseinheit entgegengerichtet sein kann.

Der Prüflingsträger dient zur Aufnahme des zu prüfenden Achsmoduls, welches im Sinne der Erfindung den zu prüfenden Prüfling darstellt. Der Prüflingsträger ist erforderlich, um das Achsmodul im Prüfstand möglichst steif aufspannen zu können und gleichzeitig mit den zum Betrieb des Achsmoduls im Prüfstand erforderlichen Mitteln bzw. Medien zu versorgen.

Dazu weist der Prüflingsträger zunächst eine mechanische Schnittstelle zum Einspannen des Achsmoduls auf. Unter dem Begriff "Einspannen" wird im Sinne der Erfindung eine möglichst steife Anbindung des Achsmoduls an den Prüfstand verstanden, so dass während des Prüfbetriebs möglichst keine den Prüfbetrieb störenden Schwingungen auftreten. Die mechanische Schnittstelle ist dabei an die spezifische Geometrie des Achsmoduls angepasst, so dass das Achsmodul an den zum Prüfen vorgesehenen Kontaktstellen eingespannt werden kann. Diese Kontaktstellen können beispielsweise diejenigen Positionen an einem Gehäuse des Achsmoduls sein, über die das Achsmodul auch bei einem Einbau in ein Kraftfahrzeug im Kraftfahrzeug eingespannt ist.

Die Vorgabe bestimmter Kontaktstellen am Achsmodul, beispielsweise durch den Hersteller des Achsmoduls, ist von Bedeutung, da sich nicht jede beliebige Stelle der Oberfläche des Achsmoduls dazu eignet, das Achsmodul einzuspannen. Einerseits muss das Achsmodul an einer Kontaktstelle sicher gehalten werden können, ohne beispielsweise auf einer schrägen Fläche abzurutschen, und andererseits muss die Kontaktstelle auch dazu ausgebildet sein, die Kräfte und Drehmomente, mit denen das Achsmodul belastet wird, aufzunehmen, ohne dadurch beschädigt bzw. verformt zu werden.

Weiterhin weist der Prüflingsträger eine elektrische Schnittstelle zum Bestromen des Achsmoduls bzw. des Elektromotors des Achsmoduls auf. Die elektrische Schnittstelle kann beispielsweise als eine oder mehrere elektrische Buchsen bzw. Stecker ausgebildet sein, die es ermöglichen, eine elektrische Verbindung zum elektrischen Antriebsmotor des Achsmoduls bzw. zu dessen Ansteuerelektronik herzustellen. Somit kann der elektrische Antriebsmotor des Achsmoduls bestromt und für den Prüfbetrieb betrieben werden.

Weiterhin weist der Prüflingsträger auch eine Sensorschnittstelle zum Kontaktieren von Sensoren des Achsmoduls auf. Hierbei kann es sich beispielsweise um einen oder mehrere Temperatursensoren handeln, um einen oder mehrere Lagesensoren zur Bestimmung einer Rotorlage des Antriebsmotors, um einen oder mehrere Stromsensoren, um einen oder mehrere Spannungssensoren, um einen oder mehrere Drehzahlsensoren und um einen oder mehrere Drehmomentsensoren. Die Sensorschnittstelle ist bevorzugt als eine Reihe von Steckern bzw. Buchsen ausgebildet, die es ermöglichen, eine elektrische Verbindung zu den entsprechenden Sensoren des Achsmoduls herzustellen.

Darüber hinaus kann die Sensorschnittstelle auch dazu ausgebildet sein, ein oder mehrere Akustiksensoren bzw. Körperschallsensoren zu kontaktieren, wobei die Akustiksensoren bzw. Körperschallsensoren auch dem Prüfstand zugeordnet sein können und nicht Bestandteile des Achsmoduls sein müssen. Beispielsweise können die Akustiksensoren bzw. Körperschallsensoren am Achsmodul angeordnet werden, um dessen akustische Eigenschaften zu überwachen.

Schließlich weist der Prüflingsträger eine Fluidschnittstelle zur Fluidversorgung des Achsmoduls auf. Das Fluid kann beispielsweise ein Schmier- oder Kühlmittel sein. Die Fluidschnittstelle ist dementsprechend vorteilhaft als eine oder mehrere hydraulische Kupplungen ausgebildet.

Vorteilhaft ist der Prüflingsträger aus dem Prüfstand entnehmbar, so dass das Achsmodul außerhalb des Prüfstands - und somit vergleichsweise einfacher - auf dem Prüflingsträger angeordnet werden kann. Das Achsmodul wird dann für den Prüfvorgang mitsamt dem Prüflingsträger an einer dafür vorgesehenen Position im Prüfstand, nämlich der Prüfposition, positioniert.

Da der Prüflingsträger vorteilhaft aus dem Prüfstand entnommen werden kann, sind die elektrische Schnittstelle, die Sensorschnittstelle und die Fluidschnittstelle des Prüflingsträgers vorteilhaft einerseits als Schnittstelle zur Kontaktierung des Achsmoduls ausgebildet, gleichzeitig aber auch zur Kontaktierung des Prüfstands. Somit können die Schnittstellen also beispielsweise einerseits bereits bei der Anordnung des Achsmoduls auf dem Prüflingsträger mit dem Achsmodul verbunden werden. Bei Erreichen der Prüfposition im Prüfstand können die Schnittstellen unmittelbar vor dem Prüfvorgang andererseits auch mit den entsprechenden Verbindungen des Prüfstands verbunden werden. In anderen Worten verbinden die die elektrische Schnittstelle, die Sensorschnittstelle und die Fluidschnittstelle also Zuleitungen des Prüfstands mit Anbindungen des Achsmoduls.

Erfindungsgemäß ist es nun vorgesehen, dass die mechanische Schnittstelle als wechselbare Prüflingsaufnahme ausgebildet ist, auf welche das Achsmodul über definierte Kontaktstellen abgelegt wird.

Das bedeutet zunächst also, dass die mechanische Schnittstelle nicht - wie im Stand der Technik üblich - ein fester Bestandteil des Prüflingsträgers ist, sondern wechselbar ist, also gegen andere mechanische Schnittstellen ausgewechselt werden kann. Somit kann je nach zu prüfendem Achsmodul vergleichsweise schnell, einfach und vor allem kostengünstig lediglich die mechanische Schnittstelle des Prüflingsträgers gewechselt werden, so dass der Prüflingsträger zur Aufnahme ganz unterschiedlich ausgebildeter Achsmodule umgerüstet werden kann. Es muss somit nicht eine Vielzahl an unterschiedlichen und vergleichsweise teuren Prüflingsträgern vorgehalten werden, sondern vorteilhaft nur eine entsprechende Anzahl an wechselbaren mechanischen Schnittstellen. Der Prüflingsträger als solcher kann vielmehr auf einfache Weise an eine Vielzahl unterschiedlicher Achsantriebe angepasst werden.

Indem das Achsmodul nur auf der Prüflingsaufnahme abgelegt wird, nämlich über die Kontaktstellen, vereinfacht sich die Anordnung bzw. Montage des Achsmoduls auf dem Prüflingsträger bzw. auf der Prüflingsaufnahme gegenüber dem Stand der Technik, da es im Stand der Technik üblich ist, das Achsmodul bei der Montage auf dem Prüflingsträger fest auf dem Prüflingsträger einzuspannen. Dieses Einspannen ist erfindungsgemäß bei der Anordnung des Achsmoduls auf dem Prüflingsträger jedoch nicht erforderlich, so dass sich die Anordnung bzw. Montage auf dem Prüflingsträger vereinfacht und beschleunigt. In anderen Worten bildet der Prüflingsträger bzw. die mechanische Schnittstelle nur ein "Positionsnest", in welches bzw. auf welches das zu prüfende Achsmodul abgelegt wird.

Die Prüflingsaufnahme ist vorteilhaft über eine standardisierte Anbindung mit dem Prüflingsträger verbindbar, beispielsweise über eine Schraubverbindung oder eine Klemmverbindung.

Erfindungsgemäß ist es vorgesehen, dass der Prüfstand ein Förderband umfasst, das dazu ausgebildet ist, den Prüflingsträger automatisiert in eine Prüfposition im Prüfstand zu fahren. Das Förderband kann insbesondere als Rollenförderband ausgebildet sein.

Daraus ergibt sich der Vorteil, dass der Prüflingsträger mit dem darauf angeordneten Achsmodul auf dem Förderband einfach abgelegt werden kann und dann mittels des Förderbands automatisiert und ohne weiteres menschliches Zutun in die Prüfposition gefahren wird. Ebenso vorteilhaft wird der Prüflingsträger mit dem Achsmodul nach Abschluss des Prüfvorgangs automatisiert wieder aus der Prüfposition herausgefahren, so dass der nächste Prüflingsträger mitsamt dem darauf angeordneten Achsmodul in die Prüfposition gefahren werden kann.

Gemäß einer besonders bevorzugten Ausführungsform der Erfindung ist es vorgesehen, dass der Prüfstand weiterhin eine entlang einer Achse verfahrbare wechselbare Spannaufnahme umfasst, die dazu ausgebildet ist, das Achsmodul auf der Prüflingsaufnahme bei Erreichen der Prüfposition automatisiert zu klemmen. Vorteilhaft wird das Achsmodul an den definierten Kontaktstellen geklemmt.

Die Achse ist dabei bevorzugt eine Vertikalachse, so dass die Spannaufnahme von oben auf das Achsmodul auf der Prüflingsaufnahme gefahren werden kann.

Alternativ bevorzugt kann es sich auch um eine Horizontalachse handeln, so dass das Achsmodul dementsprechend von der Seite geklemmt wird. In diesem Fall kann die Prüflingsaufnahme insbesondere auch eine seitliche Stütze für das Achsmodul aufweisen.

Daraus ergibt sich der Vorteil, dass auch das Einspannen des Achsmoduls in der Form des Klemmens des Achsmoduls automatisiert und ohne menschliches Zutun und somit vergleichsweise schnell erfolgt.

Die Spannaufnahme stellt dabei ein Gegenstück zur wechselbaren Prüflingsaufnahme dar und ist ebenso wie die Prüflingsaufnahme wechselbar, um eine Vielzahl unterschiedlicher Achsmodule prüfen zu können. Auch die Spannaufnahme ist somit spezifisch an das jeweils zu prüfende Achsmodul angepasst.

Im Gegensatz zur Prüflingsaufnahme ist die Spannaufnahme jedoch nicht am Prüflingsträger angeordnet bzw. nicht ein wechselbarer Bestandteil des Prüflingsträgers, sondern ist am Prüfstand angeordnet, nämlich vertikal beweglich bzw. verfahrbar oberhalb des Prüflingsträgers angeordnet.

Wenn das Achsmodul auf der Prüflingsaufnahme bzw. auf dem Prüflingsträger die Prüfposition erreicht, erfindungsgemäß mittels des Förderbands, dann wird die Spannaufnahme vorteilhaft automatisiert vertikal nach unten verfahren, um das Achsmodul zwischen der Prüflingsaufnahme und der Spannaufnahme an den Kontaktstellen zu klemmen. Damit ist das Achsmodul in den Prüfstand eingespannt und kann dem Prüfvorgang unterworfen werden.

Wie sich herausgestellt hat, ergibt das Einspannen des Achsmoduls mittels Klemmens zwischen der Prüflingsaufnahme und der Spannaufnahme eine ausreichend steife Verbindung, um auch Prüfvorgänge bei hohen Drehzahlen zu ermöglichen, ohne dass der Prüfvorgang durch auftretende mechanische Schwingungen nachteilig beeinflusst wird. Beispielsweise können auf diese Weise Achsmodule geprüft werden, deren elektrischer Antriebsmotor Drehzahlen von mehr als 18.000 U/min bereitstellen kann.

Erfindungsgemäß ist es vorgesehen, dass der Prüfstand dazu ausgebildet ist, die elektrische Schnittstelle, die Sensorschnittstelle und die Fluidschnittstelle bei Erreichen der Prüfposition automatisiert zu kontaktieren. Somit kann das Achsmodul ohne weiteres menschliches Zutun vergleichsweise schnell und effizient dem Prüfvorgang unterworfen werden.

Erfindungsgemäß ist es vorgesehen, dass die elektrische Schnittstelle, die Sensorschnittstelle und die Fluidschnittstelle als eine gemeinsame Multikupplung ausgebildet sind. Unter einer Multikupplung ist dabei eine Kupplung zu verstehen, die Schnittstellen unterschiedlicher Gattungen, wie nämlich zur Stromversorgung, zur Fluid- und Sensoranbindung, für eine gemeinsame Kontaktierung in einer gemeinsamen Kupplung verbindet. Die genannten Schnittstellen sind dabei vorzugsweise in einer definierten Anordnung innerhalb der Kupplung zueinander positioniert, so dass ein Kupplungsgegenstück, das eine spiegelbildliche Positionierung der Schnittstellen aufweist, die Kupplung kontaktieren kann und dabei auch alle Schnittstellen gleichzeitig kontaktiert. Anstatt jede Schnittstelle einzeln kontaktieren zu müssen, können über die Multikupplung also alle drei genannten Schnittstellen auf einmal kontaktiert werden. Somit reduziert sich die Vorbereitungszeit des Achsmoduls auf den Prüfvorgang.

Eine vorteilhafte Ausführungsform ist, dass die elektrische Schnittstelle, die Sensorschnittstelle und die Fluidschnittstelle in einer Vertikalbewegung kontaktiert werden. Vorteilhaft wird dementsprechend auch die Multikupplung in der Vertikalbewegung kontaktiert. Da der Prüfstand für die Vertikalbewegung der Spannaufnahme ohnehin eine Vorrichtung zur Vertikalverstellbarkeit aufweisen muss, beispielsweise einen Hydraulikzylinder oder eine elektrisch verstellbare Gewindespindel, die einen Träger verfahren, können über die Vorrichtung zur Vertikalverstellbarkeit auch die elektrische Schnittstelle, die Sensorschnittstelle und die Fluidschnittstelle bzw. die Multikupplung kontaktiert werden.

Eine vorteilhafte Ausführungsform ist, dass der Prüfstand dazu ausgebildet ist, die Multikupplung und die Spannaufnahme in einer gemeinsamen Vertikalbewegung vertikal zu verfahren, um die Multikupplung zu schließen und das Achsmodul zu klemmen. Somit müssen keine gesonderten Mittel zu die Vertikalverstellung der Multikupplung und die Vertikalverstellung der Spannaufnahme vorgesehen werden. Dadurch werden die Multikupplung und die Spannaufnahme auch gleichzeitig vertikal verfahren, so dass sich der Prüfvorgang bescheluenigt.

Gemäß einer weiteren bevorzugten Ausführungsform der Erfindung ist es vorgesehen, dass der Prüflingsträger von der elektrischen Schnittstelle, der Sensorschnittstelle und der Fluidschnittstelle ausgehende wechselbare Zuleitungen zur elektrischen Kontaktierung, zur Sensorkontaktierung und zur Fluidkontaktierung des Achsmoduls aufweist. Indem die Zuleitungen wechselbar sind, können sie analog zu den Prüflingsaufnahmen und Spannaufnahmen bedarfsweise ausgetauscht und an das zu prüfende Achsmodul angepasst werden.

Die Zuleitungen sind vorteilhaft als Kabel, Drähte bzw. Schläuche ausgebildet. Vorteilhaft weisen die Zuleitungen an einem ersten Ende, welches zur Verbindung mit der elektrischen Schnittstelle, der Sensorschnittstelle und der Fluidschnittstelle vorgesehen ist, jeweils eine standardisierte Anbindung, beispielsweise Buchse oder Stecker, auf. An ihrem anderen Ende, welches zur Verbindung mit einer entsprechenden Anbindung des Achsmoduls vorgesehen ist, weisen die Zuleitungen jedoch eine spezifisch an das Achsmodul angepasste Anbindung auf, beispielsweise einen spezifischen Stecker oder eine spezifische Buchse. Somit kann über die Auswahl entsprechender Zuleitungen das Achsmodul mit den Schnittstellen des Prüflingsträgers verbunden werden, ohne dass jeweils ein vollständiger anderer, an das Achsmodul angepasster Prüflingsträger erforderlich wird.

Erfindungsgemäß ist es vorgesehen, dass die Zuleitungen bei Erreichen der Prüfposition automatisiert mit dem Achsmodul verbunden werden. Dies kann vorteilhaft über einen oder mehrere Roboterarme geschehen, welche insbesondere Bestandteil des Prüfstands sein können. Somit kann auch die Anbindung der Zuleitungen an das Achsmodul ohne menschliches Zutun erfolgen, was wiederum die Vorbereitungszeit auf den eigentlichen Prüfvorgang reduziert.

Gemäß einer weiteren bevorzugten Ausführungsform der Erfindung ist es vorgesehen, dass der Prüfstand ein Spannaufnahmenmagazin zur Bevorratung einer Vielzahl unterschiedlicher wechselbarer Spannaufnahmen aufweist, wobei der Prüfstand dazu ausgebildet ist, die Spannaufnahmen automatisiert zu wechseln. Das Spannaufnahmenmagazin kann beispielsweise Spannaufnahmen für diejenigen Arten von Achsmodulen bevorraten, die üblicherweise mittels des Prüfstands geprüft werden. Durch eine entsprechende Bedienereingabe, beispielsweise an einem dem Prüfstand zugeordneten PC oder einer dem Prüfstand zugeordneten Steuereinheit, kann dann die Art des als nächstes zu prüfenden Achsmoduls vorgegeben werden, woraufhin der Prüfstand automatisiert eine entsprechende Spannrahme aus dem Spannaufnahmenmagazin auswählt.

Insbesondere kann das Spannaufnahmenmagazin als Führung bzw. Stange ausgebildet sein, an welcher eine Vielzahl unterschiedlicher Spannaufnahmen schlittenartig verschiebbar angeordnet sind. Eine jeweils benötigte Spannaufnahme kann dann über dem zu prüfenden Achsmodul in der Prüfposition positioniert werden.

Alternativ bevorzugt können auch unterschiedliche Spannaufnahmen mittels eines Roboterarms ausgewählt, aus einer Ablage entnommen und am Prüfstand angeordnet werden.

Gemäß einer besonders bevorzugten Ausführungsform der Erfindung ist es vorgesehen, dass der Prüfstand im Bereich der Prüfposition eine Auflage für den Prüflingsträger aufweist, wobei das Förderband oberhalb der Auflage angeordnet ist und eine Ausnehmung für die Auflage aufweist, wobei der Prüflingsträger länger und/oder breiter ist als die Ausnehmung, wobei das Förderband eine Federung aufweist und wobei der Prüfstand dazu ausgebildet ist, den Prüflingsträger mittels der Spannaufnahme entgegen der Federung auf die Auflage zu drücken.

Der Prüfstand weist also eine Auflage auf, auf welche der Prüflingsträger prinzipiell aufliegen kann. Diese Auflage ist im Bereich der Prüfposition unterhalb des Prüflingsträgers angeordnet. Da der Prüflingsträger zunächst einmal auf dem Förderband aufliegt, ist das Förderband in vertikaler Richtung zwischen dem Prüflingsträger und der Auflage angeordnet. Dementsprechend muss das Förderband eine Ausnehmung aufweisen, durch welche der Prüflingsträger in Kontakt mit der Auflage gebracht werden kann. Das Förderband ist dabei im Bereich der Prüfposition über eine Federung horizontal gehalten. Indem der Prüfstand nun eine vertikale Kraft auf das Achsmodul ausübt - vorzugsweise im Rahmen des Klemmens des Achsmoduls zwischen der Prüflingsaufnahme und der vertikal auf das Achsmodul zugestellten Spannaufnahme - wird auch eine Kraft auf das Förderband und entgegen der Federung ausgeübt. Diese Kraft ist so dimensioniert, dass sie das Achsmodul und das Förderband entgegen der Federung soweit nach unten presst, bis die Auflage von unten durch die Ausnehmung des Förderbands ragt und von unten in Anlage mit dem Prüflingsträger kommt.

Die Auflage ist vorzugsweise aus einem Betonguss oder Mineralbetonguss hergestellt.

Somit ist der Prüfling vergleichsweise steif an den Prüfstand angebunden und kann auch bei hohen und sehr hohen Drehzahlen dem Prüfvorgang unterworfen werden, ohne dass den Prüfvorgang störende Schwingungen auftreten.

Gemäß einer weiteren bevorzugten Ausführungsform der Erfindung ist es vorgesehen, dass der Prüfstand zur Herstellung einer Triebverbindung zwischen je einer Belastungseinheit und je einer Abtriebswelle des Achsmoduls ein Adapterwellenmagazin zur Bevorratung einer Vielzahl unterschiedlicher wechselbarer Adapterwellen aufweist, wobei der Prüfstand dazu ausgebildet ist, die Adapterwellen automatisiert zu wechseln. Die Adapaterwellen dienen also dazu, eine Triebverbindung zwischen je einer Belastungseinheit und je einer Abtriebswelle des Achsmoduls herzustellen, indem sie die Motorwellen der Belastungseinheiten mit den Abtriebswellen des Achsmoduls drehfest verbinden. Ein erstes Ende einer jeden Adapterwelle weist dabei eine standardisierte Verbindung auf, beispielsweise eine Steckverbindung, um die Adpaterwelle drehfest mit einer Motorwelle der jeweiligen Belastungseinheit verbinden zu können. Ein zweites Ende der Adapaterwellen ist hingegen jeweils spezifisch an die Art des zu prüfenden Achsmoduls angepasst. Indem das Adapterwellenmagazin zur Bevorratung einer Vielzahl unterschiedlicher wechselbarer Adapterwellen vorgesehen ist, kann der Prüfstand zur Prüfung einer Vielzahl unterschiedlicher Arten von Achsmodulen verwendet werden. Die Adapterwellen können beispielsweise nach Maßgabe einer Bedienereingabe über den PC oder die Steuereinheit automatisiert von einem Roboterarm gewechselt werden. Somit kann der Prüfstand auch an die unterschiedlichen Abtriebswellen unterschiedlicher Arten von Achsmodulen vergleichsweise schnell und einfach angepasst werden.

Gemäß einer weiteren bevorzugten Ausführungsform der Erfindung ist es vorgesehen, dass der mindestens eine Prüflingsträger mindestens ein Zentrierelement aufweist, wobei der der Prüfstand dazu ausgebildet ist, den mindestens einen Prüflingsträger bei Erreichen der Prüfposition mittels des mindestens einen Zentrierelements automatisiert auszurichten. Das Zentrierelement kann beispielsweise als Pin oder Bohrung ausgebildet sein.

Vorteilhaft weist der Prüflingsträger zwei Zentrierelemente auf.

Über die Zentrierelemente kann der Prüflingsträger in der Prüfposition exakt in die erforderliche Ausrichtung gebracht werden, um sowohl die Multikupplung als auch die Abtriebswellen des Achsmoduls automatisiert zu kontaktieren.

Das Zentrieren an sich erfolgt vorzugsweise, indem das Zentrierelement in Eingriff mit einem Gegenelement gebracht wird, beispielsweise eine Bohrung in Kontakt mit einem insbesondere kegelförmigen Pin, und dadurch ausgerichtet wird.

Das Zutun eines menschlichen Bedieners ist somit nicht erforderlich.

Nachfolgend wird die Erfindung anhand von in den Figuren dargestellten Ausführungsformen beispielhaft erläutert.

Es zeigen:
- Fig. 1: beispielhaft und schematisch einen Aufbau eines erfindungsgemäßen Prüfstands zum Prüfen von Eigenschaften eines elektrisch antreibbaren Achsmoduls für ein Kraftfahrzeug,
- Fig. 2: den Prüfstand der Fig. 1, jedoch mit einem eingespannten Achsmodul,
- Fig. 3: ebenfalls den Prüfstand der Fig. 1, jedoch in einer Seitenansicht,
- Fig. 4: den Prüfstand der Fig. 1 in der Seitenansicht der Fig. 3, jedoch einem eingespannten Achsmodul,
- Fig. 5: beispielhaft und schematisch eine weitere mögliche Ausbildungsform eines erfindungsgemäßen Prüfstands,
- Fig. 6: beispielhaft und schematisch eine mögliche Ausbildungsform eines Ausschnitts eines erfindungsgemäßen Prüfstands,
- Fig. 7: beispielhaft und schematisch eine mögliche Ausbildungsform eines Prüflingsträgers,
- Fig. 8: beispielhaft und schematisch eine weitere mögliche Ausbildungsform eines erfindungsgemäßen Prüfstands und
- Fig. 9: beispielhaft und schematisch eine weitere mögliche Ausbildungsform eines erfindungsgemäßen Prüfstands.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

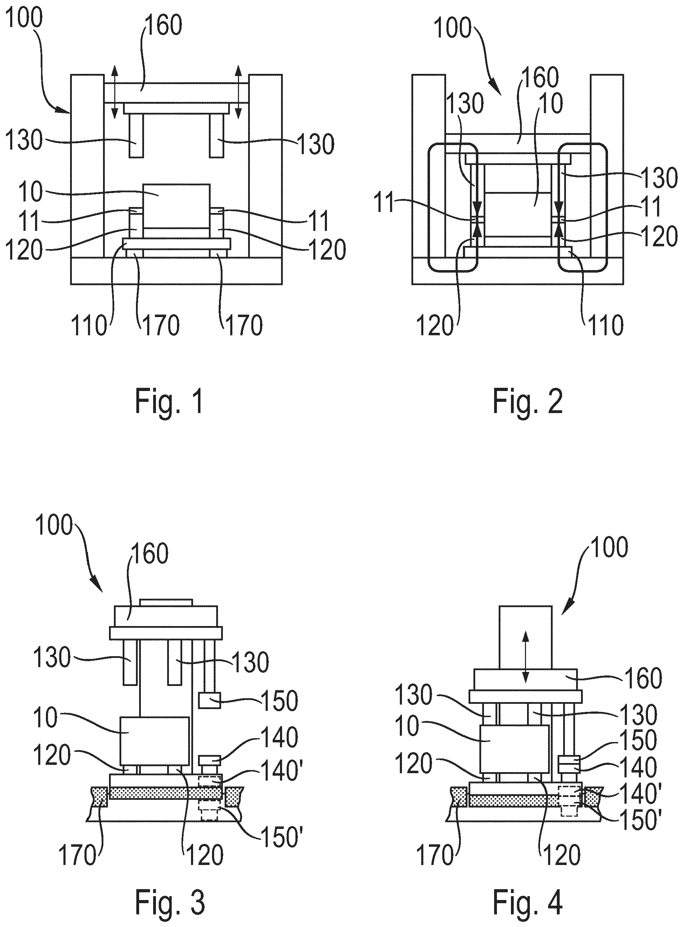

Fig. 1 zeigt beispielhaft und schematisch einen Aufbau eines erfindungsgemäßen Prüfstands 100 zum Prüfen von Eigenschaften eines elektrisch antreibbaren Achsmoduls 10 für ein Kraftfahrzeug (nicht dargestellt in Fig. 1) in einer Ansicht von vorne. Der Prüfstand umfasst beispielsgemäß zwei nicht dargestellte Belastungseinheiten, die jeweils als Elektromotoren ausgebildet sind und deren Motorwellen (ebenfalls nicht dargestellt in Fig. 1) über jeweils dazu ausgebildete Adapterwellen (ebenfalls nicht dargestellt in Fig. 1) jeweils drehfest mit den Abtriebswellen (ebenfalls nicht dargestellt in Fig. 1) des Achsmoduls 10 verbunden sind.

Weiterhin umfasst der Prüfstand 100 der Fig. 1 einen Prüflingsträger 110, wobei der Prüflingsträger 110 seinerseits eine mechanische Schnittstelle 120 zum Einspannen des Achsmoduls 10, eine elektrische Schnittstelle 141 zum Bestromen des Achsmoduls 10, eine Sensorschnittstelle 143 zum Kontaktieren von Sensoren des Achsmoduls 10 und eine Fluidschnittstelle 142 zur Fluidversorgung des Achsmoduls 10 umfasst. Der besseren Anschaulichkeit wegen ist jedoch nur die mechanische Schnittstelle 120 in Fig. 1 dargestellt.

Wie zu sehen ist, ist das Achsmodul 10 auf der mechanischen Schnittstelle 120, die als wechselbare Prüflingsaufnahme 120 ausgebildet ist, abgelegt. Das Achsmodul 10 weist dazu eine Reihe von definierten Kontaktstellen 11 auf. Die Prüflingsaufnahme 120 ist an die spezifische Geometrie des Achsmoduls 10 angepasst, so dass das Achsmodul 10 an den zum Prüfen vorgesehenen Kontaktstellen 11 eingespannt werden kann, bzw. zunächst mittels der Kontaktstellen 11 auf der Prüflingsaufnahme 120 abgelegt werden kann. Bei den Kontaktstellen 11 des Achsmoduls 10 handelt es sich beispielsgemäß um diejenigen Kontaktstellen 11, über die das Achsmodul 10 auch bei einem Einbau in ein Kraftfahrzeug im Kraftfahrzeug eingespannt ist.

Weiterhin zu sehen ist in Fig. 1, dass der Prüfstand 100 auch eine entlang einer Vertikalachse verfahrbare (dargestellt durch 2 Pfeile in Fig. 1) wechselbare Spannaufnahme 130 umfasst. Die Spannaufnahme 130 wird dabei durch den Träger 160 verfahren. Die Spannaufnahme 130 ist ebenso wie die Prüflingsaufnahme 120 dazu ausgebildet, das Achsmodul 10 im Prüfstand 100 einzuspannen, beispielsgemäß durch Klemmen, indem die Spannaufnahme 130 von oben vertikal nach unten gefahren wird, um das Achsmodul 10 an den definierten Kontaktstellen 11 einzuspannen.

Wenn das Achsmodul 10 auf der Prüflingsaufnahme 120 angeordnet wurde und die Prüflingsaufnahme 120 mit dem Prüflingsträger 110 im Prüfstand 100 angeordnet wurde, kann die Spannaufnahme 130 automatisiert vertikal nach unten gefahren werden, um das Achsmodul 10 einzuspannen.

Ebenfalls gezeigt in Fig. 1 ist ein Förderband 170, das beispielsgemäß als Rollenförderband 170 ausgebildet ist. Das Förderband 170 weist eine in Fig. 1 nicht dargestellte Federung 180 unterhalb des Förderbands 170 auf, welche das Förderband 170 mit dem darauf angeordneten Prüflingsträger 110 sowie der Prüflingsaufnahme 120 nach oben drängt.

Sowohl die Prüflingsaufnahme 120 als auch die Spannaufnahme 130 sind wechselbar, d.h., dass auf dem Prüflingsträger 110 unterschiedliche Prüflingsaufnahmen 120 angeordnet werden können, welche jeweils an unterschiedliche Achsmodule 10 angepasst sind. Es ist daher vorteilhaft nicht notwendig, eine Vielzahl an vergleichsweise teuren Prüflingsträgern 110 mit jeweils fest angeordneter mechanischer Schnittstelle 120 vorzuhalten, um unterschiedliche Gattungen von Achsmodulen 10 im Prüfstand 100 prüfen zu können.

In analoger Weise ist auch die Spannaufnahme 130 wechselbar, um unterschiedliche Gattungen von Achsmodulen 10 im Prüfstand 100 einspannen und prüfen zu können
Fig. 2 zeigt den Prüfstand 100 der Fig. 1, jedoch mit einem eingespannten Achsmodul 10. Wie zu sehen ist, ist der Träger 160 mit der Spannaufnahme 130 vertikal nach unten verfahren, um das Achsmodul 10 zwischen der Spannaufnahme 130 und der Prüflingsaufnahme 120 an den dafür vorgesehenen, definierten Kontaktstellen 11 zu klemmen.

Da die Spannaufnahme 130 vertikal nach unten gefahren wurde, um das Achsmodul 10 im Prüfstand 100 einzuspannen, wirkt ein entsprechender Druck von oben auf die Federung 180 des Förderbands 170, so dass dieses entgegen der Federkraft der Federung 180 nach vertikal unten gepresst wird und auf eine in Fig. 2 nicht dargestellten Auflage 190 von oben aufliegt. Die eingezeichneten, ringförmigen Pfeile veranschaulichen den Kraftfluss zum Klemmen des Achsmoduls 10 an den Kontaktstellen 11 durch die Prüflingsaufnahme 110 und die Spannaufnahme 130.

Fig. 3 zeigt ebenfalls den Prüfstand 100 der Fig. 1, jedoch in einer Seitenansicht. In der Seitenansicht der Fig. 3 ist gegenüber der Frontalansicht der Fig. 1 zusätzlich eine Multikupplung 140 zu sehen, welche oben auf dem Prüflingsträger 110 angeordnet ist. Die Multikupplung 140 fasst dabei die Schnittstellen 141, 142, 143 zur Stromversorgung des Achsmoduls 10 sowie zur Fluid- und Sensoranbindung für eine gemeinsame Kontaktierung zusammen. Diese Schnittstellen 141, 142, 143 sind in einer definierten Anordnung innerhalb der Multikupplung 140 zueinander positioniert, so dass ein Kupplungsgegenstück 150, das eine spiegelbildliche Positionierung der Schnittstellen 141, 142, 143 aufweist, die Multikupplung 140 kontaktieren kann, um so alle Schnittstellen 141, 142, 143 in der Multikupplung 140 gleichzeitig zu verbinden.

Wie zu sehen ist, wird die Multikupplung 140 mit dem Kupplungsgegenstück 150 verbunden, wenn die Spannaufnahme 130 vertikal nach unten verfahren wird, da die Spannaufnahme 130 und das Kupplungsgegenstück 150 am selben Träger 160 des Prüfstands 100 angeordnet sind.

In gestrichelter Darstellung zeigt Fig. 3 eine weitere mögliche Anordnungsform der Multikupplung 140'. In diesem Fall ist die Multikupplung 140' nicht oben auf dem Prüflingsträger 110 angeordnet, sondern unten am Prüflingsträger 110. Das zugehörige Kupplungsgegenstück 150' ist ebenfalls gestrichelt dargestellt und unterhalb des Förderbands 140 angeordnet. In diesem Fall wird die Multikupplung 140' mit dem Kupplungsgegenstück 150' verbunden, wenn die Spannaufnahme 130 ausreichend Kraft auf das Achsmodul 10 und damit auf den Prüflingsträger 110 ausübt, um diese entgegen der Federkraft der Federung 180 (nicht dargestellt in Fig. 3) des Förderbands 170 in Richtung des Kupplungsgegenstücks 150' zu bewegen und so die Multikupplung 140' mit dem Kupplungsgegenstück 150' zu verbinden.

Fig. 4 zeigt den Prüfstand 100 der Fig. 1 in der Seitenansicht der Fig. 3, jedoch einem eingespannten Achsmodul 10. Zudem ist in der Fig. die Multikupplung 140 mit dem Kupplungsgegenstück 150 verbunden bzw. die gestrichelt dargestellte, alternative Multikupplung 140' ist mit dem Kupplungsgegenstück 150' verbunden.

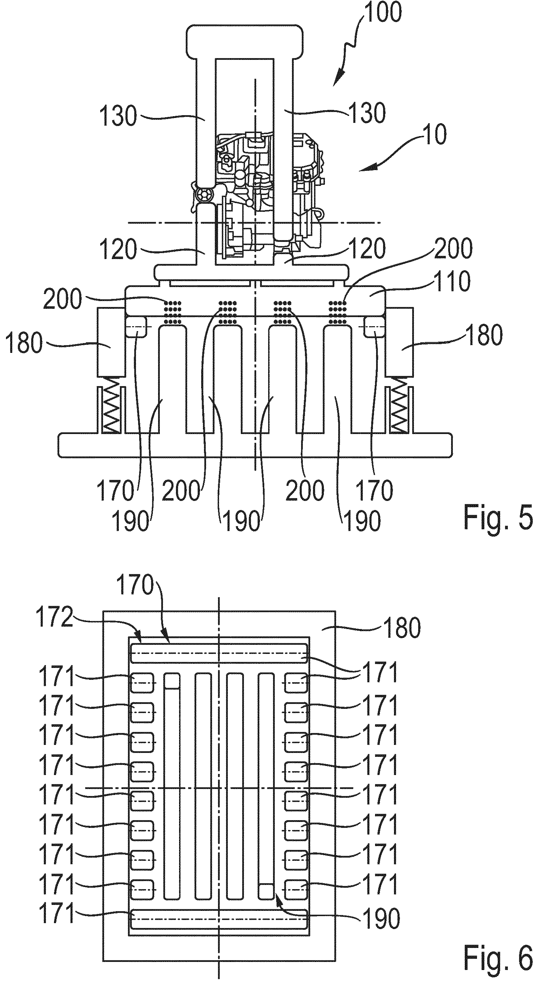

Fig. 5 zeigt beispielhaft und schematisch eine weitere mögliche Ausbildungsform eines erfindungsgemäßen Prüfstands 100 zum Prüfen von Eigenschaften eines elektrisch antreibbaren Achsmoduls 10 für ein Kraftfahrzeug (nicht dargestellt in Fig. 5). Die Fig. 5 zeigt gegenüber den Figs. 1 bis 4 insbesondere die Auflage 190, die beispielsgemäß aus vier Rippen besteht, die jeweils aus einem Mineralguss hergestellt wurden. An den oberen Enden der Rippen der Auflage 190 sind Abstreifer 200 angeordnet, die beispielsgemäß als Bürsten 200 ausgebildet sind, um Verschmutzungen von der Unterseite des Prüflingsträger 110 zu entfernen, wenn dieser durch das Förderband 170 über die Auflage 190 bewegt wird. Eine Ausbildung der Abstreifer 200 als Gummilippen ist ebenfalls denkbar. Wenn nun der (in Fig. 5 nicht dargestellte) Träger 160 vertikal nach unten fährt, um die Spannaufnahme 130 nach unten zu verfahren und das Achsmodul 10 im Prüfstand 100 einzuspannen, so wirkt auch eine Kraft auf die Prüflingsaufnahme 120, den Prüflingsträger 110 und das Förderband 170. Diese Kraft drängt das Förderband 170 entgegen der Federkraft der Federungen 180 nach unten, bis der Prüflingsträger 110 auf der Auflage 190 aufliegt.

Fig. 6 zeigt beispielhaft und schematisch eine mögliche Ausbildungsform eines Ausschnitts eines erfindungsgemäßen Prüfstands 100, nämlich die Auflage 190, bestehend aus vier Rippen, sowie das Förderband 170 und die Federung 180 in einer Draufsicht von oben.

Wie zu sehen ist, weist das Förderband 170, welches beispielsgemäß ein Rollenförderband 170 mit Rollen 171 ist, eine Ausnehmung 172 auf. Durch die Ausnehmung 172 ist die Auflage 190 zu sehen. Das Förderband 170 wird durch die Federung 180 normalerweise in einer Position oberhalb der Auflage 190 gehalten. Bei einer entsprechenden Beaufschlagung mit einer vertikal nach unten wirkenden Kraft, kann das Förderband 170 aber entgegen der Federkraft der Federung 180 nach unten gedrängt werden.

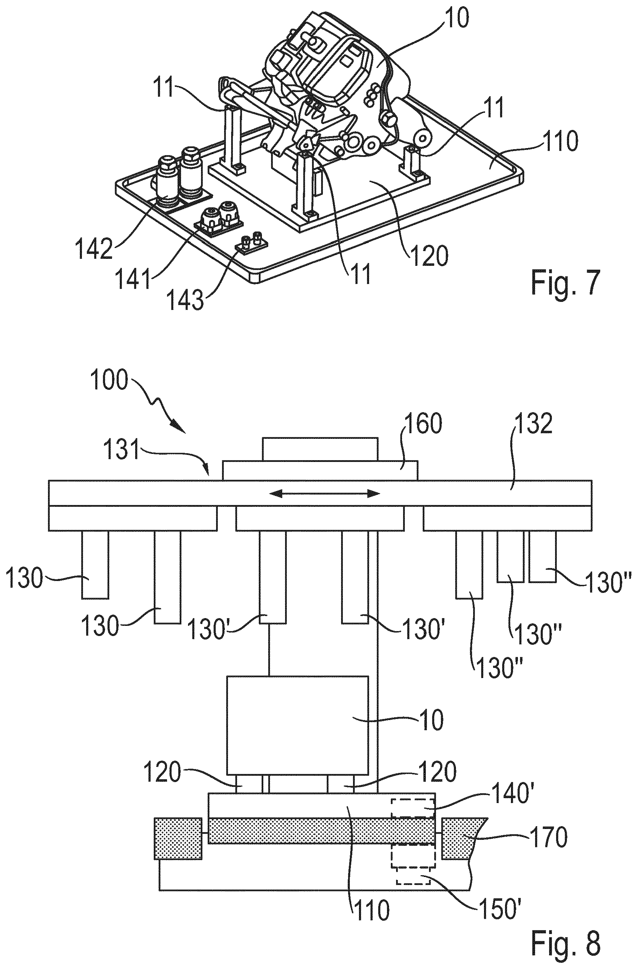

Fig. 7 zeigt beispielhaft und schematisch eine mögliche Ausbildungsform eines Prüflingsträgers 110 mit einer Prüflingsaufnahme 120 sowie einer elektrischen Schnittstelle 141, einer Fluidschnittstelle 142 und einer Sensorschnittstelle 143. Wie zu sehen ist, weist jede Schnittstelle 141, 142, 143 beispielsgemäß zwei Buchsen auf, wobei jeweils eine erste Buchse jeder Schnittstelle 141, 142, 143 eine Zuführung von elektrischem Strom bzw. elektrischer Spannung bzw. Fluid an das Achsmodul 10 ermöglicht und jeweils eine zweite Buchse jeder Schnittstelle 141, 142, 143 eine Rückführung ermöglicht. Dazu werden jeweils die erste Buchse und die zweite Buchse einer jeden Schnittstelle 141, 142, 143 über ein dazu geeignetes Verbindungsmittel wie ein passendes Kabel, einen geeigneten Schlauch oder einen geeigneten Draht mit passend ausgebildetem Stecker mit den entsprechenden Anbindungen des Achsmoduls 10 verbunden. Die Verbindungsmittel sind ebenso wie die Prüflingsaufnahme 120 wechselbar, so dass abhängig vom zu prüfenden Achsmodul 10 jeweils geeignete Verbindungsmittel 120 ausgewählt werden können und mit der ersten und der zweiten Buchse der Schnittstellen 141, 142 und 143 verbunden werden können. Das Achsmodul 10 liegt mit den Kontaktstellen 11 auf der Prüflingsaufnahme 120 auf.

Beispielsgemäß stellen die Schnittstellen 141, 142, 143 eine Multikupplung 140' dar, die durch eine entsprechendes Kupplungsgegenstück 150' von unten durch den Prüfstand 100 kontaktiert werden kann, um über die Schnittstellen 141, 142, 143 für das Achsmodul 10 eine elektrische Versorgung bzw. Fluidversorgung bzw. Sensorsignalanbindung zu ermöglichen.

Fig. 8 zeigt beispielhaft und schematisch eine weitere mögliche Ausbildungsform eines erfindungsgemäßen Prüfstands 100 zum Prüfen von Eigenschaften eines elektrisch antreibbaren Achsmoduls 10 für ein Kraftfahrzeug (nicht dargestellt in Fig. 8).

Der Prüfstand der Fig. 8 weist eine Multikupplung 140' die von unten mittels eines Kupplungsgegenstücks 150' kontaktiert werden kann. Außerdem weist der Prüfstand 100 ein Spannaufnahmenmagazin 131 zur Bevorratung von drei unterschiedlichen wechselbaren Spannaufnahmen 130, 130' 130" auf, wobei der Prüfstand 100 dazu ausgebildet ist, die Spannaufnahmen 130, 130' 130" automatisiert zu wechseln. Zum automatisierten Wechseln der Spannaufnahmen 130, 130' 130" können diese entlang der Plattform 132 seitlich verfahren werden, so dass jeweils ein benötigter bzw. zu einem Achsmodul 10 passender Spannaufnahmen 130, 130' 130" oberhalb des Achsmoduls positioniert werden kann und somit für den Prüfvorgang verwendet werden kann.

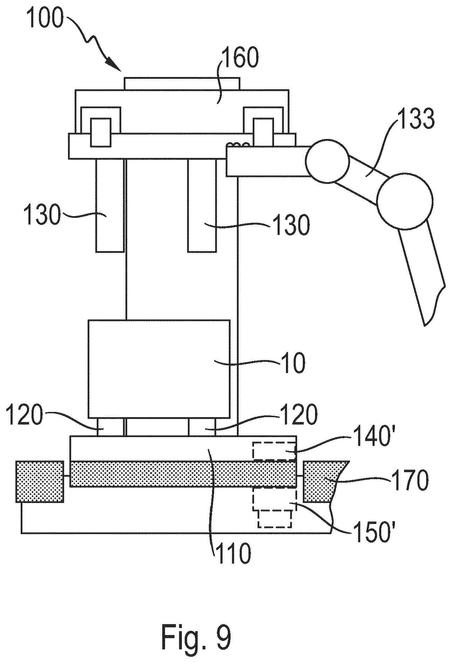

Fig. 9 zeigt beispielhaft und schematisch eine weitere mögliche Ausbildungsform eines erfindungsgemäßen Prüfstands 100 zum Prüfen von Eigenschaften eines elektrisch antreibbaren Achsmoduls 10 für ein Kraftfahrzeug (nicht dargestellt in Fig. 9).

Der Prüfstand 100 der Fig. 9 unterscheidet sich vom Prüfstand 100 der Fig. 8 durch die Ausbildungsform des Spannaufnahmenmagazins 131 (nicht dargestellt in Fig. 9). Im Gegensatz zum Prüfstand 100 der Fig. 8 weist der Prüfstand 100 der Fig. 9 nämlich einen Roboterarm 133 auf, der die unterschiedlichen Spannaufnahmen 130, 130' 130" aus dem Spannaufnahmenmagazin 131 entnimmt und am Träger 160 anordnet.

### Bezugszeichen

- 10: Achsmodul
- 11: Kontaktstelle
- 100: Prüfstand
- 110: Prüflingsträger
- 120: Prüflingsaufnahme, mechanische Schnittstelle
- 130: Spannaufnahme
- 130': Spannaufnahme
- 130": Spannaufnahme
- 130‴: Spannaufnahme
- 131: Spannaufnahmenmagazin
- 132: Plattform
- 133: Roboterarm
- 140: Multikupplung
- 140': Multikupplung
- 141: elektrische Schnittstelle
- 142: Fluidschnittstelle
- 143: Sensorschnittstelle
- 150: Gegenkupplungsstück
- 150': Gegenkupplungsstück
- 160: Träger
- 170: Förderband, Rollenförderband
- 171: Rollen
- 172: Ausnehmung
- 180: Federung
- 190: Auflage
- 200: Abstreifer, Bürste, Gummilippe

## Patentansprüche

1. Prüfstand (100) zum Prüfen von Eigenschaften eines elektrisch antreibbaren Achsmoduls (10) für ein Kraftfahrzeug, umfassend mindestens eine Belastungseinheit und mindestens einen Prüflingsträger (110) mit einer mechanischen Schnittstelle (120) zum Einspannen des Achsmoduls (10), einer elektrischen Schnittstelle (141) zum Bestromen des Achsmoduls (10) und einer Sensorschnittstelle (143) zum Kontaktieren von Sensoren des Achsmoduls (10) wobei die mechanische Schnittstelle (120) als wechselbare Prüflingsaufnahme (120) ausgebildet ist, auf welche das Achsmodul (10) über definierte Kontaktstellen (11) ablegbar ist,
**dadurch gekennzeichnet, dass** der mindestens eine Prüflingsträger (110) zudem eine Fluidschnittstelle (142) zur Fluidversorgung des Achsmoduls (10) umfasst,
dass der Prüfstand (100) ein Förderband (170) umfasst, das dazu ausgebildet ist, den Prüflingsträger (110) automatisiert in eine Prüfposition im Prüfstand (100) zu fahren,
dass der Prüfstand (100) dazu ausgebildet ist, die elektrische Schnittstelle (141), die Sensorschnittstelle (143) und die Fluidschnittstelle (142) bei Erreichen der Prüfposition automatisiert zu kontaktieren,
dass die elektrische Schnittstelle (141), die Sensorschnittstelle (143) und die Fluidschnittstelle (142) als eine gemeinsame Multikupplung (140, 140') ausgebildet sind.

2. Prüfstand (100) nach Anspruch 1,
**dadurch gekennzeichnet, dass** der Prüfstand (100) weiterhin eine entlang einer Achse verfahrbare wechselbare Spannaufnahme (130, 130', 130") umfasst, die dazu ausgebildet ist, das Achsmodul (10) auf der Prüflingsaufnahme (120) bei Erreichen der Prüfposition automatisiert zu klemmen.

3. Prüfstand (100) nach mindestens einem der Ansprüche 1 und 2, **dadurch gekennzeichnet, dass** die elektrische Schnittstelle (141), die Sensorschnittstelle (143) und die Fluidschnittstelle (142) in einer Vertikalbewegung kontaktiert werden.

4. Prüfstand (100) nach mindestens einem der Ansprüche 1 bis 3, **dadurch gekennzeichnet, dass** der Prüfstand dazu ausgebildet ist, die Multikupplung (140) und die Spannaufnahme (130) in einer gemeinsamen Vertikalbewegung vertikal zu verfahren, um die Multikupplung (140) zu schließen und das Achsmodul (10) zu klemmen.

5. Prüfstand (100) nach mindestens einem der Ansprüche 1 bis 4, **dadurch gekennzeichnet, dass** der Prüflingsträger (110) von der elektrischen Schnittstelle (141), der Sensorschnittstelle (143) und der Fluidschnittstelle (142) ausgehende wechselbare Zuleitungen zur elektrischen Kontaktierung, zur Sensorkontaktierung und zur Fluidkontaktierung des Achsmoduls aufweist.

6. Prüfstand (100) nach Anspruch 5, **dadurch gekennzeichnet, dass** die Zuleitungen bei Erreichen der Prüfposition automatisiert mit dem Achsmodul (10) verbunden werden.

7. Prüfstand (100) nach mindestens einem der Ansprüche 1 bis 6, **dadurch gekennzeichnet, dass** der Prüfstand (100) im Bereich der Prüfposition eine Auflage (190) für den Prüflingsträger (110) aufweist, wobei das Förderband (170) oberhalb der Auflage (190) angeordnet ist und eine Ausnehmung (172) für die Auflage (190) aufweist, wobei der Prüflingsträger (110) länger und/oder breiter ist als die Ausnehmung (190), wobei das Förderband (170) eine Federung (180) aufweist und wobei der Prüfstand (100) dazu ausgebildet ist, den Prüflingsträger (110) mittels der Spannaufnahme (130, 130', 130") entgegen der Federung (180) auf die Auflage (190) zu drücken.

## Claims

1. Test stand (100) for testing properties of an electrically drivable axle module (10) for a motor vehicle, comprising at least one load unit and at least one test object carrier (110) with a mechanical interface (120) for clamping the axle module (10), an electrical interface (141) for energizing the axle module (10) and a sensor interface (143) for contacting sensors of the axle module (10), wherein the mechanical interface (120) is in the form of an exchangeable test object receptacle (120) on which the axle module (10) can be set down via defined contact points (11),
**characterized in that** the at least one test object carrier (110) additionally comprises a fluid interface (142) for supplying fluid to the axle module (10),
**in that** the test stand (100) comprises a conveyor belt (170) which is designed
to move the test object carrier (110) automatically into a test position in the test stand (100),
**in that** the test stand (100) is designed to contact the electrical interface (141), the sensor interface (143) and the fluid interface (142) automatically on reaching the test position,
**in that** the electrical interface (141), the sensor interface (143) and the fluid interface (142) are in the form of a common multi-coupling (140, 140').

2. Test stand (100) according to Claim 1,
**characterized in that** the test stand (100) also comprises an exchangeable clamping receptacle (130, 130', 130") that is movable along an axis and is designed to clamp the axle module (10) on the test object receptacle (120) automatically on reaching the test position.

3. Test stand (100) according to at least one of Claims 1 and 2, **characterized in that** the electrical interface (141), the sensor interface (143) and the fluid interface (142) are contacted in a vertical movement.

4. Test stand (100) according to at least one of Claims 1 to 3, **characterized in that** the test stand is designed to move the multi-coupling (140) and the clamping receptacle (130) vertically in a joint vertical movement in order to close the multi-coupling (140) and clamp the axle module (10).

5. Test stand (100) according to at least one of Claims 1 to 4,
**characterized in that** the test object carrier (110) has exchangeable feed lines for electrical contacting, for sensor contacting and for fluid contacting of the axle module, said feed lines extending from the electrical interface (141), the sensor interface (143) and the fluid interface (142).

6. Test stand (100) according to Claim 5,
**characterized in that** the feed lines are automatically connected to the axle module (10) on reaching the test position.

7. Test stand (100) according to at least one of Claims 1 to 6,
**characterized in that** the test stand (100) has a support (190) for the test object carrier (110) in the region of the test position, wherein the conveyor belt (170) is arranged above the support (190) and has an opening (172) for the support (190), wherein the test object carrier (110) is longer and/or wider than the opening (190), wherein the conveyor belt (170) has a suspension (180), and wherein the test stand (100) is designed to press the test object carrier (190) onto the support (110) counter to the suspension (180) by means of the clamping receptacle (130, 130', 130").

## Revendications

1. Banc d'essai (100) pour tester les propriétés d'un module d'essieu (10) à entraînement électrique pour un véhicule automobile, comprenant au moins une unité de charge et au moins un support d'objets à tester (110) avec une interface mécanique (120) pour serrer le module d'essieu (10), une interface électrique (141) pour alimenter le module d'essieu (10) et une interface de capteurs (143) pour la mise en contact de capteurs du module d'essieu (10), l'interface mécanique (120) étant réalisée sous la forme d'un logement d'objets à tester interchangeable (120) sur lequel le module d'essieu (10) peut être déposé par l'intermédiaire de points de contact (11) définis,
**caractérisé en ce que** ledit au moins un support d'objets à tester (110) comprend en outre une interface de fluide (142) pour l'alimentation en fluide du module d'essieu (10),
**en ce que** le banc d'essai (100) comprend une bande transporteuse (170) qui est réalisée pour :
déplacer de manière automatisée le support d'objets à tester (110) vers une position d'essai dans le banc d'essai (100),
**en ce que** le banc d'essai (100) est réalisé pour mettre en contact de manière automatisée l'interface électrique (141), l'interface de capteur (143) et l'interface de fluide (142) lorsque la position d'essai est atteinte,
**en ce que** l'interface électrique (141), l'interface de capteurs (143) et l'interface de fluide (142) sont réalisées sous la forme d'un multicouplage commun (140, 140').

2. Banc d'essai (100) selon la revendication 1,
**caractérisé en ce que** le banc d'essai (100) comprend en outre un logement de serrage interchangeable mobile le long d'un axe (130, 130', 130"), qui est réalisé pour serrer de manière automatisée le module d'essieu (10) sur le logement d'objets à tester (120) lorsque la position d'essai est atteinte.

3. Banc d'essai (100) selon au moins l'une des revendications 1 et 2, **caractérisé en ce que** l'interface électrique (141), l'interface de capteur (143) et l'interface de fluide (142) sont mis en contact selon un mouvement vertical.

4. Banc d'essai (100) selon au moins l'une des revendications 1 à 3, **caractérisé en ce que** le banc d'essai est conçu pour déplacer verticalement le couplage multiple (140) et le mandrin de serrage (130) selon un mouvement vertical commun pour fermer le couplage multiple (140) et serrer le module d'essieu (10).

5. Banc d'essai (100) selon au moins l'une des revendications 1 à 4,
**caractérisé en ce que** le support d'objet à tester (110) provenant de l'interface électrique (141), de l'interface de capteur (143) et de l'interface de fluide (142) présentent des lignes d'alimentation interchangeables pour le contact électrique, pour le contact du capteur et pour le contact fluidique du module d'essieu.

6. Banc d'essai (100) selon la revendication 5,
**caractérisé en ce que** les lignes d'alimentation sont connectées de manière automatisée au module d'essieu (10) lorsque la position d'essai est atteinte.

7. Banc d'essai (100) selon au moins l'une des revendications 1 à 6,
**caractérisé en ce que** le banc d'essai (100) présente, dans la zone de la position d'essai, un support (190) pour le support d'objets à tester (110), la bande transporteuse (170) étant disposée au-dessus du support (190) et présentant un évidement (172) destiné au support (190), le support d'objets à tester (110) étant plus long et/ou plus large que l'évidement (190), la bande transporteuse (170) comportant une suspension (180) et le banc d'essai (100) étant conçu pour comprimer sur le support (190) le support d'objets à tester (110) au moyen du mandrin de serrage (130, 130', 130") à l'encontre de la suspension (180).
